# EUROPEAN PATENT APPLICATION

(11) **EP 4 770 056 A1**
(43) Date of publication of application: **01.07.2026**
(21) Application number: 25224811.7
(22) Date of filing: 18.12.2025
(51) Int. Cl.: H04L 67/30, H04L 67/51, H04L 67/00

(54) **DEVICE REGISTRATION SYSTEM, DEVICE REGISTRATION DEVICE, DEVICE REGISTRATION PROGRAM, AND MANAGEMENT SYSTEM**

(30) Priority: 26.12.2024 JP 2024231101
(71) Applicant: KYOCERA Document Solutions Inc., Osaka-shi, Osaka 540-8585 (JP)
(72) Inventor: NAKAJIMA, Koki, Osaka-shi, Osaka, 540-8585 (JP)
(74) Representative: Herrero & Asociados, S.L.

(57) **Abstract**

A device registration system (40) allows an electronic device (60) to be registered into an application providing system (20) that provides an application for use by the electronic device (60). When receiving from the electronic device (60) a request to register the electronic device (60) into the application providing system (20), the device registration system (40) allows the application providing system (20) to create a tenant in association with which the electronic device (60) as a source of the request is to be registered and allows the application providing system (20) to register the electronic device (60) as the source of the request in association with the tenant created by the application providing system (20).

## Description

### BACKGROUND

The present invention relates to device registration systems for use in registering electronic devices into application providing systems that provide applications for use by the electronic devices, device registration devices, device registration programs, and management systems.

A system is known in which an electronic device is registered in association with each tenant.

### SUMMARY

A technique improved over the aforementioned technique is proposed as one aspect of the present invention.

A device registration system according to an aspect of the present invention is a device registration system that allows an electronic device to be registered into an application providing system that provides an application for use by the electronic device. When receiving from the electronic device a request to register the electronic device into the application providing system, the device registration system allows the application providing system to create a tenant in association with which the electronic device as a source of the request is to be registered and allows the application providing system to register the electronic device as the source of the request in association with the tenant created by the application providing system.

A device registration device according to another aspect of the present invention allows an electronic device to be registered into an application providing system that provides an application for use by the electronic device. When receiving from the electronic device a request to register the electronic device into the application providing system, the device registration device allows the application providing system to create a tenant in association with which the electronic device as a source of the request is to be registered and allows the application providing system to register the electronic device as the source of the request in association with the tenant created by the application providing system.

A device registration program according to still another aspect of the present invention is a device registration program for use in registering an electronic device into an application providing system that provides an application for use by the electronic device. When a computer receives from the electronic device a request to register the electronic device into the application providing system, the device registration program allows the computer to execute to allow the application providing system to create a tenant in association with which the electronic device as a source of the request is to be registered and allows the computer to execute to allow the application providing system to register the electronic device as the source of the request in association with the tenant created by the application providing system.

A management system according to yet still another aspect of the present invention includes an electronic device, an application providing system, and the device registration system according to the above aspect of the present invention. The application providing system provides an application for use by the electronic device.

### BRIEF DESCRIPTION OF THE DRAWINGS

FIG. 1 is a block diagram showing an example of a system according to one embodiment of the present invention.
FIG. 2 is a block diagram showing an example of a cloud application providing system shown in FIG. 1 when constituted by a single computer.
FIG. 3 is a table showing an example of tenant management information shown in FIG. 2.
FIG. 4 is a diagram showing an example of a tenant hierarchy shown in the tenant management information shown in FIG. 3.
FIG. 5 is a table showing an example of tenant user management information shown in FIG. 2.
FIG. 6 is a table showing an example of device management information shown in FIG. 2.
FIG. 7 is a block diagram showing an example of a device registration system shown in FIG. 1 when constituted by a single computer.
FIG. 8 is a table showing an example of plan information shown in FIG. 7.
FIG. 9 is a block diagram showing an example of a data analysis system shown in FIG. 1 when constituted by a single computer.
FIG. 10 is a table showing an example of tenant creation history information shown in FIG. 9.
FIG. 11 is a table showing an example of device registration history information shown in FIG. 9.
FIG. 12 is a table showing an example of request processing history information shown in FIG. 9.
FIG. 13 is a block diagram showing an example of an image forming apparatus shown in FIG. 1 when constituted by an MFP.
FIG. 14 is a table showing an example of device information shown in FIG. 13.
FIG. 15 is a sequence diagram of an operation of the system shown in FIG. 1 when a device registration request program has been activated.
FIG. 16 is a sequence diagram of an operation of the system shown in FIG. 1 when a device registration requester has accepted an input of an e-mail address.
FIG. 17 is a flowchart of an operation of the device registration system shown in FIG. 7 when a device registration request has been placed into an acceptance queue.
FIG. 18 is a flowchart of an operation of the image forming apparatus shown in FIG. 13 when having received a waiting notification.
FIG. 19 is a flowchart of an operation of the device registration system shown in FIG. 7 when having received a processing status inquiry.
FIG. 20 is a flowchart of an example of an operation of the device registration system shown in FIG. 7 in sending a device registration request placed in an acceptance queue to a cloud service.
FIG. 21 is a flowchart of another example of an operation of the device registration system shown in FIG. 7 in sending a device registration request placed in an acceptance queue to the cloud service, the example being different from the example shown in FIG. 20.
FIG. 22 is a table showing an example of priority information stored in a storage device shown in FIG. 7.
FIG. 23 is a sequence diagram of an operation of the system shown in FIG. 1 in sending a device registration request from the device registration system to the cloud service.
FIG. 24 is a sequence diagram of "TENANT CREATION AND DEVICE REGISTRATION" shown in FIG. 23.
FIG. 25 is a flowchart of an operation of the data analysis system shown in FIG. 9 in displaying a dashboard for management.

### DETAILED DESCRIPTION

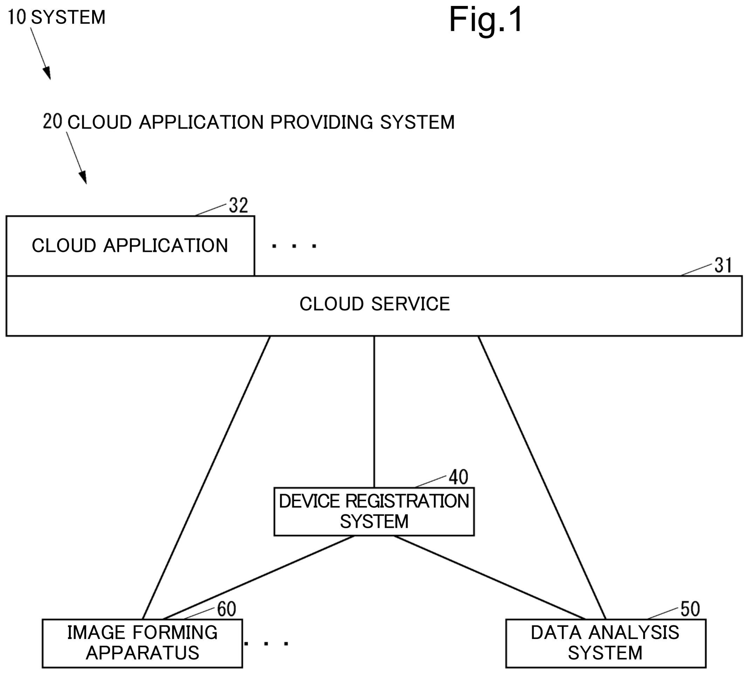

First, a description will be given of the configuration of a system according to an embodiment of the present invention. FIG. 1 is a block diagram showing an example of a management system 10 according to this embodiment.

As shown in FIG. 1, the management system 10 includes a cloud application providing system 20 that provides cloud applications. The cloud application providing system 20 may be constituted by a single computer, such as a PC (personal computer), or may be constituted by a plurality of computers. The cloud application providing system 20 is built in a cloud. The cloud application providing system 20 is an example of an application providing system defined in CLAIMS.

The management system 10 further includes a device registration system 40 for use in registering an image forming apparatus as an electronic device into the cloud application providing system 20. The device registration system 40 may be a device registration device constituted by a single computer, such as a PC, or may be constituted by a plurality of computers. Alternatively, the device registration system 40 may be built in the cloud.

The management system 10 further includes a data analysis system 50 that analyzes data acquired from the cloud application providing system 20 and the device registration system 40. The data analysis system 50 may be constituted by a single computer, such as a PC, or may be constituted by a plurality of computers. Alternatively, the data analysis system 50 may be built in the cloud.

The management system 10 further includes an image forming apparatus 60 that uses a cloud application provided by the cloud application providing system 20. The management system 10 may include, in addition to the image forming apparatus 60, at least one image forming apparatus having the same or similar structure as the image forming apparatus 60. Each of these image forming apparatuses may be constituted by, for example, a printer-only machine, a scanner-only machine or an MFP (multifunction peripheral).

The cloud application providing system 20 provides a cloud service 31 through which cloud applications are provided. The cloud service 31 makes publicly available a REST API (application program interface) which enables access to the cloud service 31 from the outside. The cloud service 31 communicates via the REST API with the device registration system 40.

The cloud application providing system 20 provides a cloud application 32 that can be provided in the cloud service 31. The cloud application providing system 20 may provide, in addition to the cloud application 32, any other cloud application to be provided in the cloud service 31. Examples of the other cloud applications include: an application that allows an image forming apparatus to execute printing based on data stored in the cloud and saves in the cloud image data read from an original document by the image forming apparatus; and an application that executes various processing, such as OCR (optical character recognition), to image data read from an original document by the image forming apparatus.

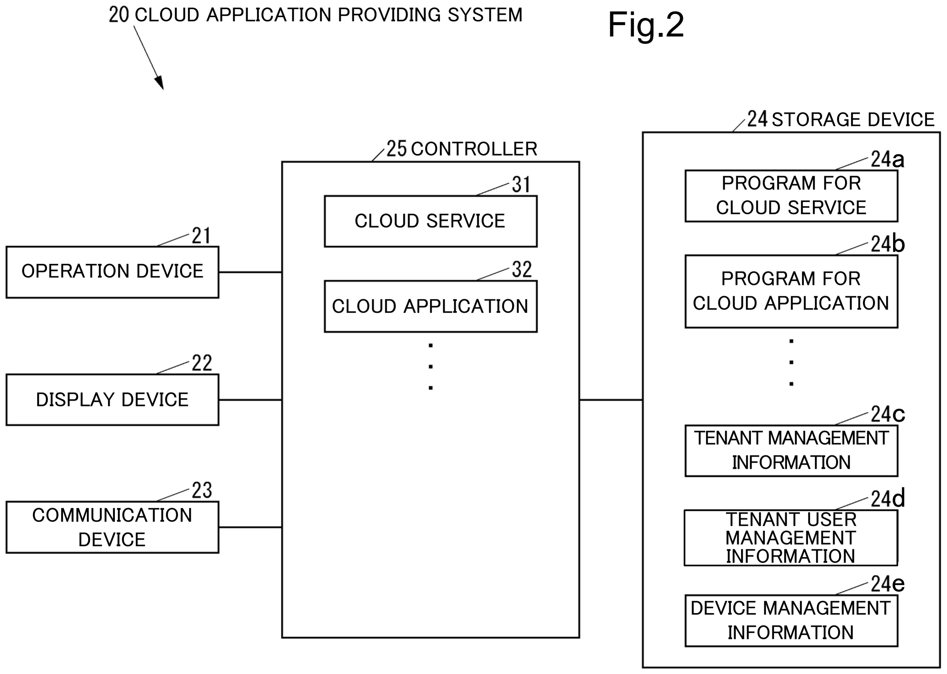

FIG. 2 is a block diagram showing an example of the cloud application providing system 20 when constituted by a single computer.

As shown in FIG. 2, the cloud application providing system 20 includes: an operation device 21, such as a keyboard or a mouse, to which various operations are to be input; a display device 22, such as an LCD (liquid crystal display), on which various information is to be displayed; a communication device 23 that communicates with external devices via a network, such as a LAN (local area network) or the Internet, or directly by wire or wireless without a network; a non-volatile storage device 24, such as a semiconductor memory or an HDD (hard disk drive), that stores various information; and a controller 25 that controls the entire cloud application providing system 20.

The storage device 24 can store a program 24A for cloud service for use in implementing the cloud service 31. The program 24A for cloud service may be installed on the cloud application providing system 20, for example, in the production stage of the cloud application providing system 20, may be additionally installed on the cloud application providing system 20 from an external storage medium, such as a USB (universal serial bus) memory, or may be additionally installed on the cloud application providing system 20 over the network.

The storage device 24 can store, on the basis of each cloud application, a program for cloud application for use in implementing the cloud application. For example, the storage device 24 can store a program 24B for cloud application for use in implementing the cloud application 32. Each of these programs for cloud application may be installed on the cloud application providing system 20, for example, in the production stage of the cloud application providing system 20, may be additionally installed on the cloud application providing system 20 from an external storage medium, such as a USB memory, or may be additionally installed on the cloud application providing system 20 over the network.

The storage device 24 can store tenant management information 24C for use in managing tenants in the cloud service 31.

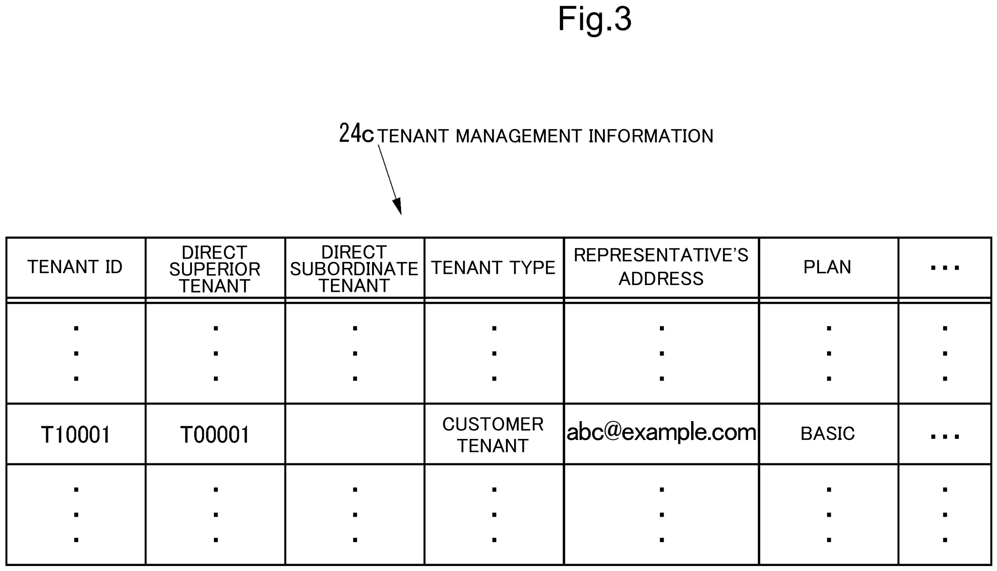

FIG. 3 is a table showing an example of tenant management information 24C.

As shown in FIG. 3, the tenant management information 24C contains, for each subject tenant, a "Tenant ID" as identification information on the subject tenant, a tenant directly superior to the subject tenant (hereinafter, referred to as a "Direct Superior Tenant"), a tenant directly subordinated to the subject tenant (hereinafter, referred to as a "Direct Subordinate Tenant"), a type of the subject tenant (hereinafter, referred to as a "Tenant Type"), an e-mail address of a representative of the subject tenant (hereinafter, referred to as a "Representative's Address"), a "Plan" on a cloud application according to which the subject tenant uses the cloud application. The value of "Direct Superior Tenant" in the tenant management information 24C is shown by the tenant ID of the direct superior tenant. The value of "Direct Subordinate Tenant" in the tenant management information 24C is shown by the tenant ID of the direct subordinate tenant. The values of "Tenant Type" in the tenant management information 24C include: "seller tenant" representing a tenant as the seller of the image forming apparatus; and "customer tenant" representing a tenant as a customer of the seller of the image forming apparatus. Examples of the value of "Plan" include: "basic" having the least limited access to the cloud application; "entry" having a greater limited access to the cloud application than "basic"; and "free" having the most limited access to the cloud application. The tenant management information 24C shown in FIG. 3 shows only a portion thereof by omitting the other portions.

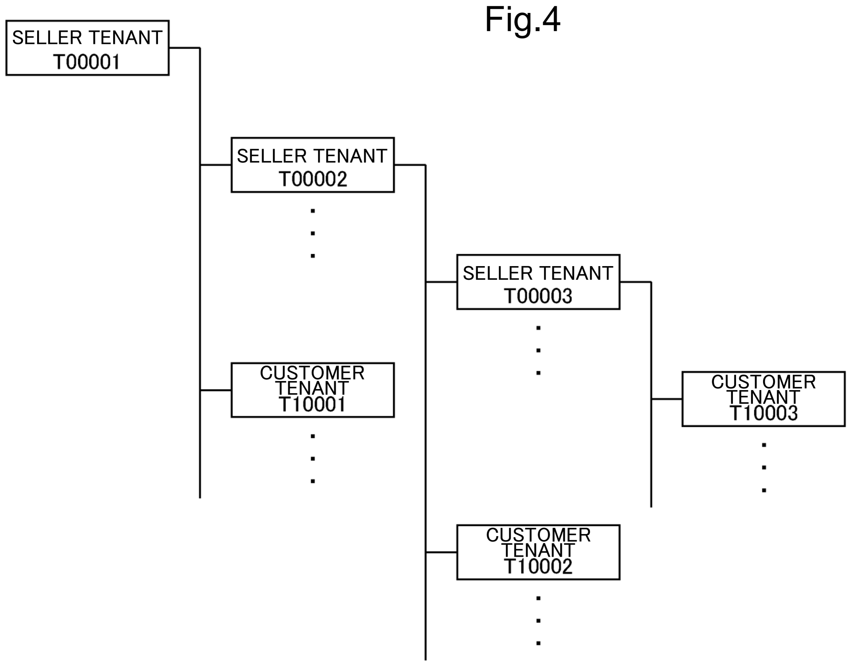

FIG. 4 is a diagram showing an example of a tenant hierarchy shown in the tenant management information 24C.

As shown in FIG. 4, tenants shown in the tenant management information 24C are arranged in a hierarchy. In the hierarchy, a seller tenant may be directly subordinated to another seller tenant. On the other hand, any customer tenant can only be directly subordinated to a seller tenant.

As shown in FIG. 2, the storage device 24 can store tenant user management information 24D for use in managing users of the tenants (hereinafter, referred to as "tenant users").

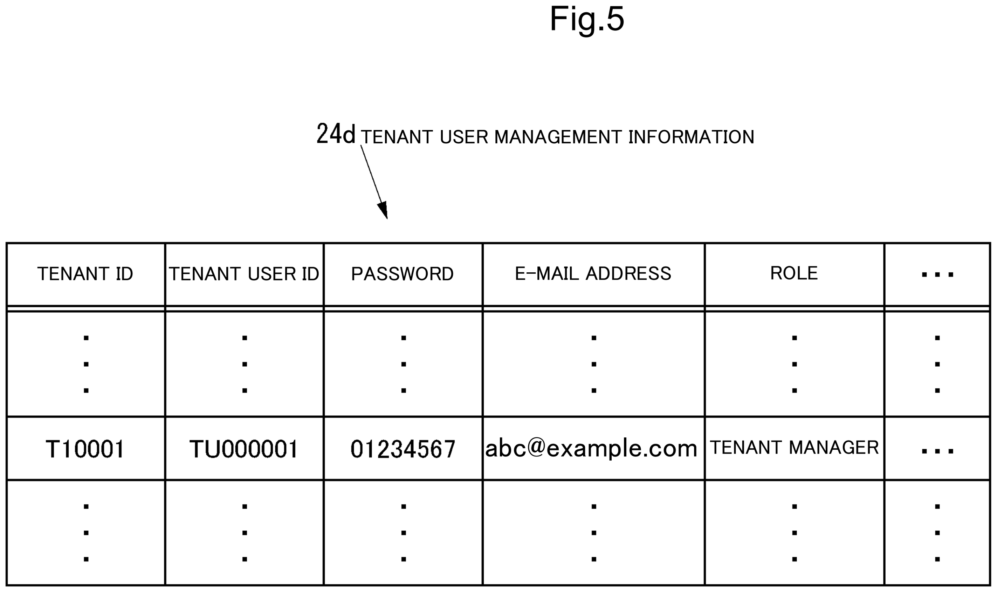

FIG. 5 is a table showing an example of tenant user management information 24D.

As shown in FIG. 5, the tenant user management information 24D contains, for each tenant user, a "Tenant ID" of a tenant to which the tenant user belongs, a "Tenant User ID" as identification information on the tenant user, a "Password" of the tenant user, an "E-Mail Address" of the tenant user, and a "Role" of the tenant user. Examples of the value of "Role" in the tenant user management information 24D include: a manager of the tenant (hereinafter, referred to as a "tenant manager"); and a "general user". The tenant user management information 24D shown in FIG. 5 shows only a portion thereof by omitting the other portions.

As shown in FIG. 2, the storage device 24 can store device management information 24E for use in managing image forming apparatuses belonging to the tenants.

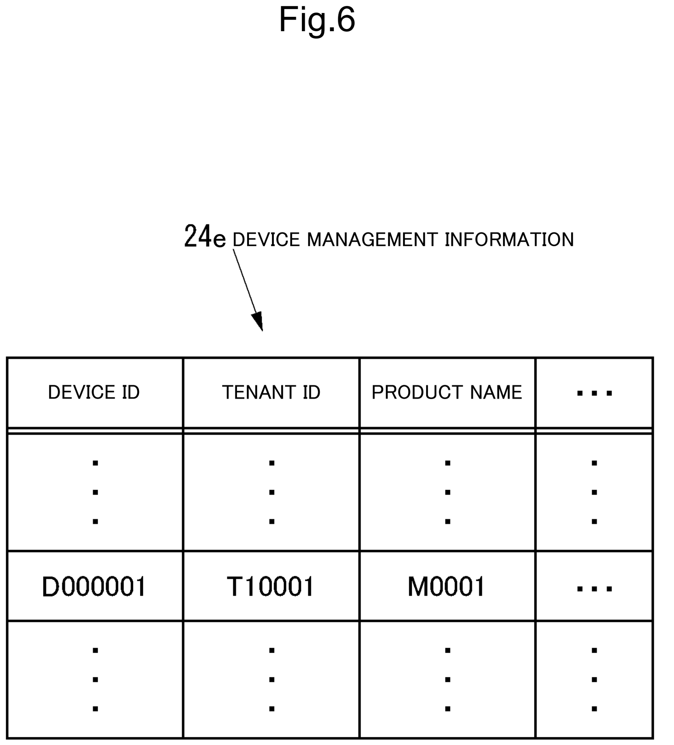

FIG. 6 is a table showing an example of device management information 24E.

As shown in FIG. 6, the device management information 24E contains, for each image forming apparatus, a "Device ID" as identification information on the image forming apparatus, a "Tenant ID" of a tenant to which the image forming apparatus belongs, and a "Product Name" of the image forming apparatus. The device ID may be, for example, a serial number of the image forming apparatus. The device management information 24E shown in FIG. 6 shows only a portion thereof by omitting the other portions.

The controller 25 shown in FIG. 2 includes, for example, a CPU (central processing unit), a ROM (read only memory) that holds programs and various types of data, and a RAM (random access memory) as a memory for use as a working area for the CPU of the controller 25. The CPU of the controller 25 executes programs stored in the storage device 24 or the ROM of the controller 25.

The controller 25 executes the program 24A for cloud service and, thus, functions as a cloud servicer that provides the cloud service 31. The controller 25 executes the program 24B for cloud application stored in the storage device 24 to operate in accordance with this program, and a function exerted by this operation serves as a cloud application 32. The cloud application is provided, by the cloud servicer, for example, to the image forming apparatus 60. For example, by executing the program 24B for cloud application, the controller 25 implements the cloud application 32.

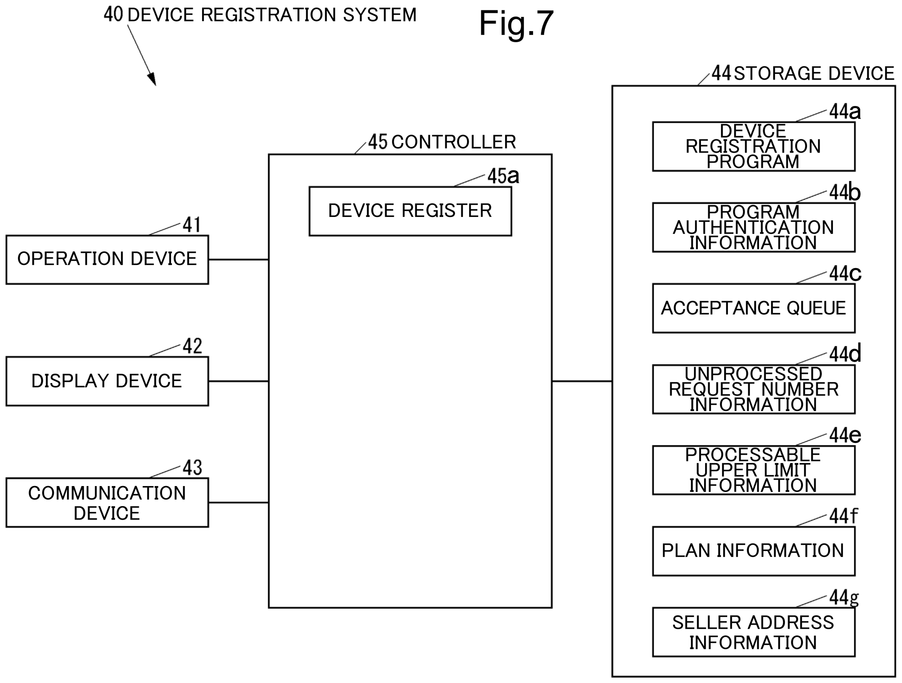

FIG. 7 is a block diagram showing an example of the device registration system 40 when constituted by a single computer.

As shown in FIG. 7, the device registration system 40 includes: an operation device 41, such as a keyboard or a mouse, to which various operations are to be input; a display device 42, such as an LCD, on which various information is to be displayed; a communication device 43 that communicates with external devices via a network, such as a LAN or the Internet, or directly by wire or wireless without a network; a non-volatile storage device 44, such as a semiconductor memory or an HDD, that stores various information; and a controller 45 that controls the entire device registration system 40.

The device registration system 40 is associated with a specific seller tenant.

The storage device 44 can store a device registration program 44A for use in registering an image forming apparatus into the cloud application providing system 20. The device registration program 44A may be installed on the device registration system 40, for example, in the production stage of the device registration system 40, may be additionally installed on the device registration system 40 from an external storage medium, such as a USB memory, or may be additionally installed on the device registration system 40 over the network.

The storage device 44 can store information (hereinafter, referred to as "program authentication information") 44B necessary to authenticate a later-described device registration request program for each image forming apparatus (see FIG. 1).

The storage device 44 can store an acceptance queue 44C that accepts a request to the cloud service 31 for the registration of the image forming apparatus (hereinafter, referred to as a "device registration request").

The storage device 44 can store unprocessed request number information 44D showing the number of unprocessed requests which is the number of unprocessed ones of device registration requests sent to the cloud service 31.

The storage device 44 can store processable upper limit information 44E showing the processable upper limit which is an upper limit on the number of device registration requests that can simultaneously be processed in the cloud service 31.

The storage device 44 can store plan information 44F showing a plan to be set for a newly created tenant.

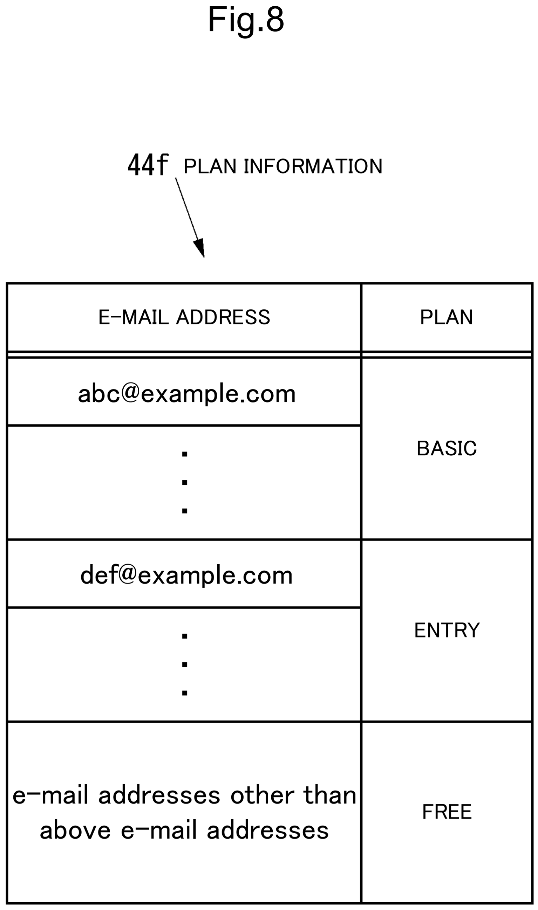

FIG. 8 is a table showing an example of plan information 44F.

The plan information 44F shown in FIG. 8 contains, for each e-mail address, the e-mail address and a plan. The plan information 44F shown in FIG. 8 shows only a portion thereof by omitting the other portions.

As shown in FIG. 7, the storage device 44 can store seller address information 44G showing an e-mail address of a tenant manager of the seller tenant associated with the device registration system 40.

The controller 45 includes, for example, a CPU, a ROM that holds programs and various types of data, and a RAM as a memory for use as a working area for the CPU of the controller 45. The CPU of the controller 45 executes programs stored in the storage device 44 or the ROM of the controller 45.

When the above CPU serves as a computer to execute the device registration program 44A, the controller 45 operates as a device register 45A that allows an image forming apparatus to be registered into the cloud application providing system 20.

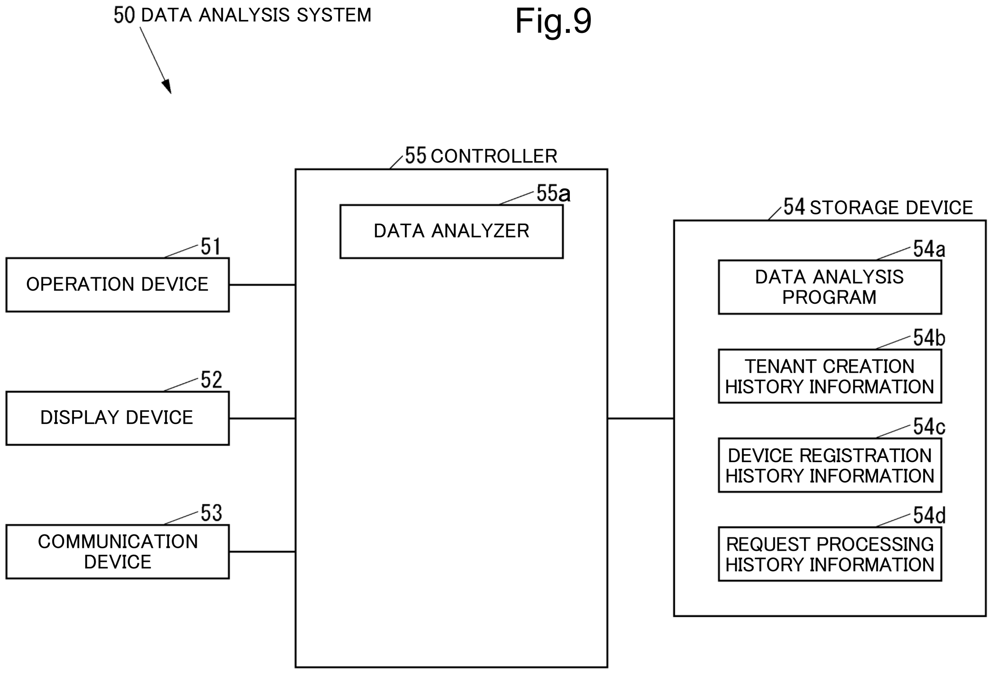

FIG. 9 is a block diagram showing an example of the data analysis system 50 when constituted by a single computer.

As shown in FIG. 9, the data analysis system 50 includes: an operation device 51, such as a keyboard or a mouse, to which various operations are to be input; a display device 52, such as an LCD, on which various information is to be displayed; a communication device 53 that communicates with external devices via a network, such as a LAN or the Internet, or directly by wire or wireless without a network; a non-volatile storage device 54, such as a semiconductor memory or an HDD, that stores various information; and a controller 55 that controls the entire data analysis system 50.

The storage device 54 can store a data analysis program 54A for use in analyzing data on the cloud application providing system 20 and the data analysis system 40. The data analysis program 54A may be installed on the data analysis system 50, for example, in the production stage of the data analysis system 50, may be additionally installed on the data analysis system 50 from an external storage medium, such as a USB memory, or may be additionally installed on the data analysis system 50 over the network.

The storage device 54 can store tenant creation history information 54B showing the history of creation of tenants.

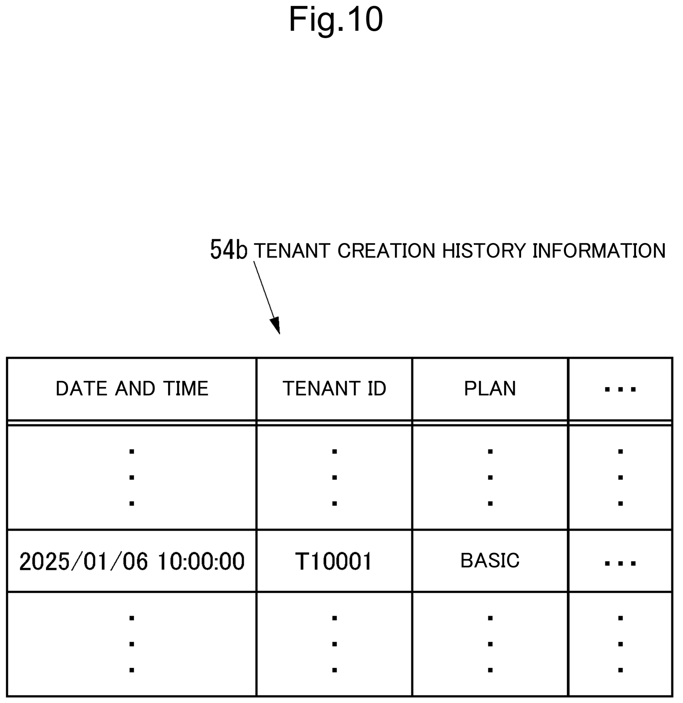

FIG. 10 is a table showing an example of tenant creation history information 54B.

As shown in FIG. 10, the tenant creation history information 54B contains, for each creation of a tenant, the date and time of creation of the tenant, the tenant ID of the created tenant, and a plan set for the created tenant. The tenant creation history information 54B shown in FIG. 10 shows only a portion thereof by omitting the other portions.

As shown in FIG. 9, the storage device 54 can store device registration history information 54C showing the history of registration of image forming apparatuses.

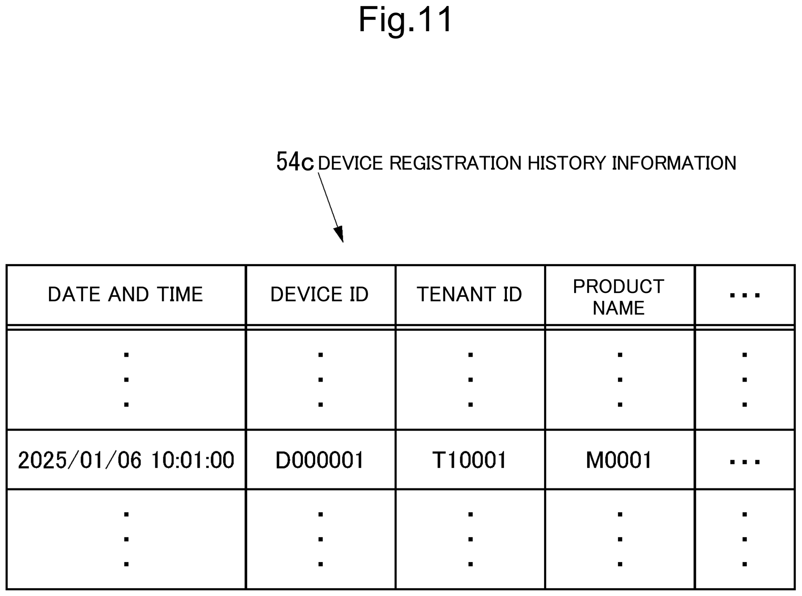

FIG. 11 is a table showing an example of device registration history information 54C.

The device registration history information 54C shown in FIG. 11 contains, for each registration of an image forming apparatus, the date and time of registration of the image forming apparatus, the device ID of the registered image forming apparatus, the tenant ID of the tenant to which the registered image forming apparatus belongs, and the product name of the registered image forming apparatus. The device registration history information 54C shown in FIG. 11 shows only a portion thereof by omitting the other portions.

As shown in FIG. 9, the storage device 54 can store request processing history information 54D showing the history of processing statuses of device registration requests.

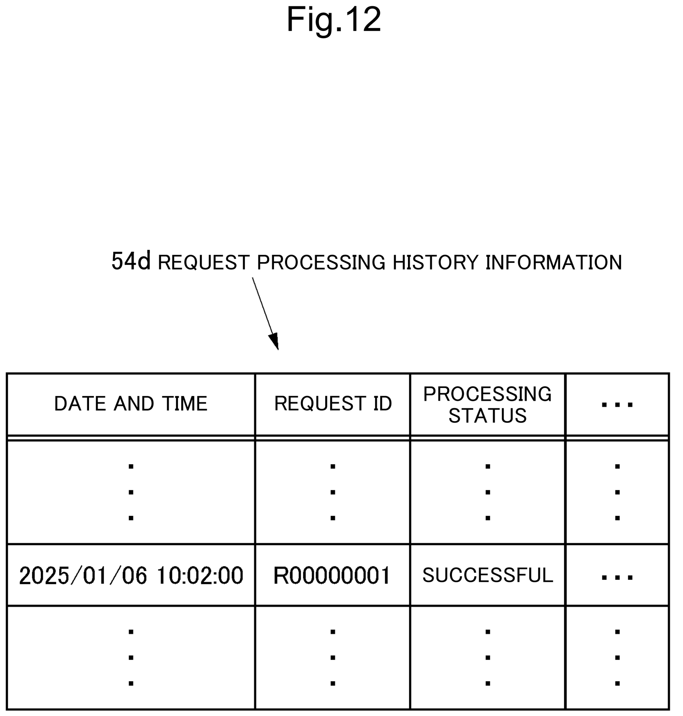

FIG. 12 is a table showing an example of request processing history information 54D.

The request processing history information 54D shown in FIG. 12 contains, for each processing status of a device registration request, the date and time when a change in processing status of the device registration request has occurred, a request ID as identification information on the device registration request, and the processing status of the device registration request. Examples of the processing status of a device registration request include: "waiting" for the processing of the device registration request; "under execution" of the processing of the device registration request; "success" as a result of the processing of the device registration request; and "failure" as a result of the processing of the device registration request. The request processing history information 54D shown in FIG. 12 shows only a portion thereof by omitting the other portions.

The controller 55 shown in FIG. 9 includes, for example, a CPU, a ROM that holds programs and various types of data, and a RAM as a memory for use as a working area for the CPU of the controller 55. The CPU of the controller 55 executes programs stored in the storage device 54 or the ROM of the controller 55.

When the above CPU serves as a computer to execute the data analysis program 54A, the controller 55 operates as a data analyzer 55A that analyzes data on the cloud application providing system 20 and the device registration system 40.

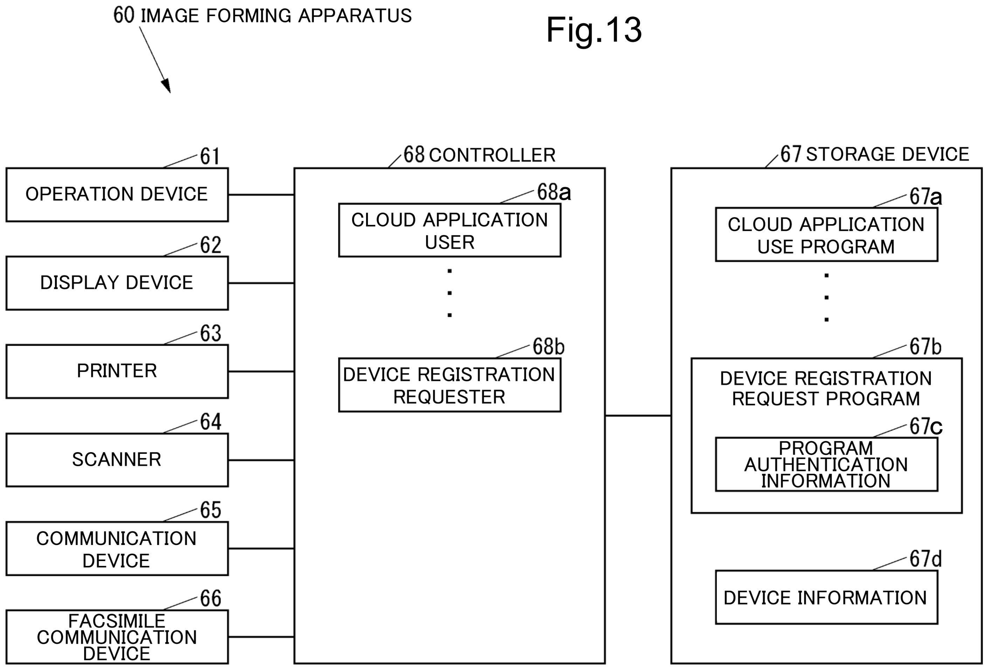

FIG. 13 is a block diagram showing an example of the image forming apparatus 60 when constituted by an MFP.

As shown in FIG. 13, the image forming apparatus 60 includes: an operation device 61, such as a keyboard or a mouse, to which various operations are to be input; a display device 62, such as an LCD (liquid crystal display), on which various information is to be displayed; a printer 63 which is a printing device that prints an image on a recording medium, such as a sheet of paper; a scanner 64 which is a reading device that reads an image from an original document; a communication device 65 that communicates with external devices via a network, such as a LAN or the Internet, or directly by wire or wireless without a network; a facsimile communication device 66 which is a facsimile device that does facsimile communication with unshown external facsimile devices via communication lines, such as public phone lines; a non-volatile storage device 67, such as a semiconductor memory or an HDD (hard disk drive), that stores various information; and a controller 68 that controls the entire image forming apparatus 60.

The storage device 67 can store, on the basis of each cloud application, a cloud application use program for use of the cloud application provided by the cloud application providing system 20 (see FIG. 1). For example, the storage device 67 can store a cloud application use program 67A for use of the cloud application 32 (see FIG. 1). Each of these cloud application use programs may be installed on the image forming apparatus 60, for example, in the production stage of the image forming apparatus 60, may be additionally installed on the image forming apparatus 60 from an external storage medium, such as a USB memory, or may be additionally installed on the image forming apparatus 60 over the network.

The storage device 67 can store a device registration request program 67B for use in requesting the cloud service 31 to register the image forming apparatus 60. The device registration request program 67B may be installed on the image forming apparatus 60, for example, in the production stage of the image forming apparatus 60, may be additionally installed on the image forming apparatus 60 from an external storage medium, such as a USB memory, or may be additionally installed on the image forming apparatus 60 over the network.

The device registration request program 67B contains program authentication information 67C on the device registration request program 67B itself.

The storage device 67 can store device information 67D showing various information on the image forming apparatus 60.

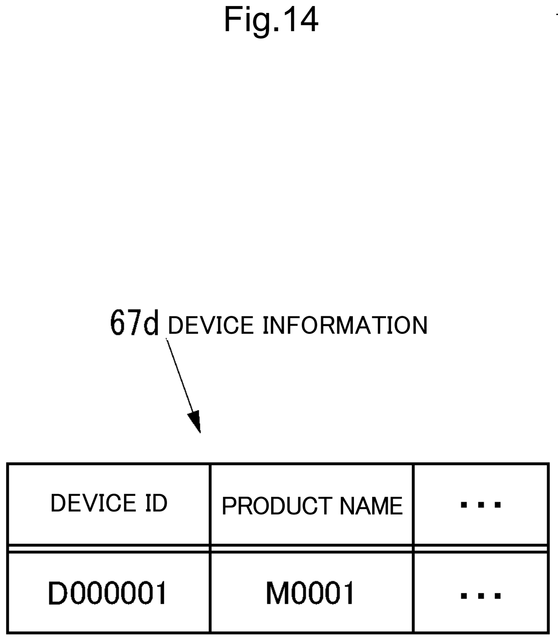

FIG. 14 is a table showing an example of device information 67D.

As shown in FIG. 14, the device information 67D contains the "device ID" of the image forming apparatus 60, and the "product name" of the image forming apparatus 60. The device information 67D shown in FIG. 14 shows only a portion thereof by omitting the other portions.

The controller 68 shown in FIG. 13 includes, for example, a CPU, a ROM that holds programs and various types of data, and a RAM as a memory for use as a working area for the CPU of the controller 68. The CPU of the controller 68 executes programs stored in the storage device 67 or the ROM of the controller 68.

When the above CPU serves as a computer to execute a cloud application use program, the controller 68 operates as a cloud application user that uses a cloud application. For example, by executing the cloud application use program 67A, the controller 68 implements a cloud application user 68A that uses the cloud application 32.

The controller 68 executes the device registration request program 67B and, thus, implements a device registration requester 68B that requests the cloud service 31 to register the image forming apparatus 60.

Next, a description will be given of operations of the management system 10.

First, a description will be given of an operation of the management system 10 when the device registration request program 67B has been activated.

In the case where the user of the image forming apparatus 60 executes initial settings for the image forming apparatus 60, the controller 68 of the image forming apparatus 60 activates the device registration request program 67B. For example, after the image forming apparatus 60 is connected to the Internet during initial settings for the image forming apparatus 60, the controller 68 of the image forming apparatus 60 may activate the device registration request program 67B.

Alternatively, the user of the image forming apparatus 60 can instruct the image forming apparatus 60 through the operation device 61 to activate the device registration request program 67B. When instructed to activate the device registration request program 67B, the controller 68 of the image forming apparatus 60 activates the device registration request program 67B.

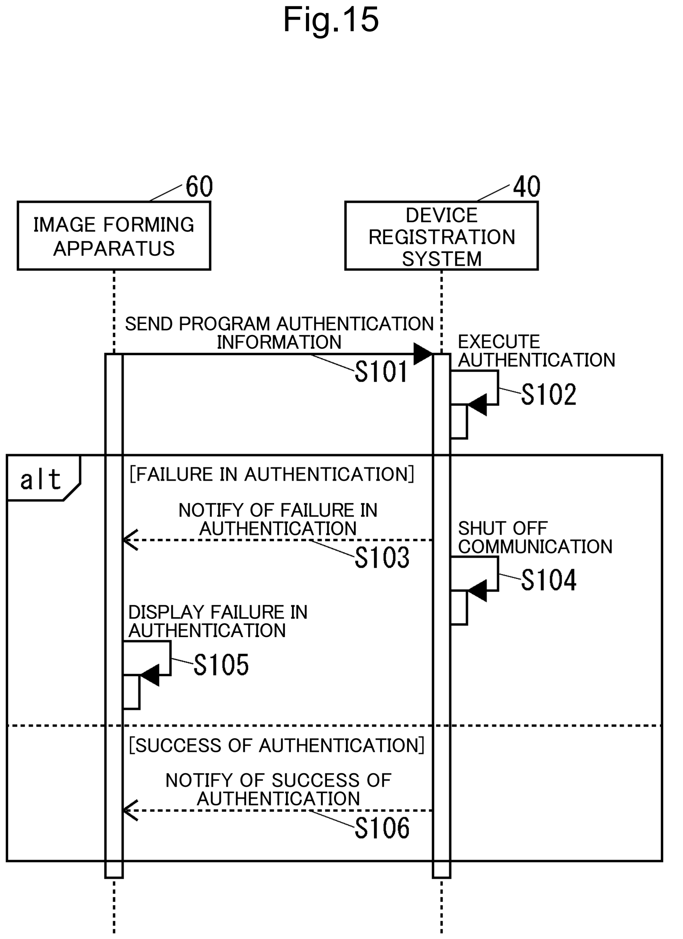

FIG. 15 is a sequence diagram of an operation of the management system 10 when the device registration request program 67B has been activated.

When the controller 68 of the image forming apparatus 60 activates the device registration request program 67B, the device registration requester 68B sends, as shown in FIG. 15, program authentication information 67C on the device registration request program 67B to the device registration system 40 (S101).

When receiving the program authentication information sent from the image forming apparatus 60 in S101, the device register 45A of the device registration system 40 executes authentication of the device registration request program 67B based on the received program authentication information and program authentication information stored in the storage device 44 (S 102). Specifically, when the same program authentication information as the program authentication information sent from the image forming apparatus 60 in S 101 exists in the storage device 44, the device register 45A determines that the authentication of the device registration request program 67B is successful. On the other hand, when the same program authentication information as the program authentication information sent from the image forming apparatus 60 in S101 does not exist in the storage device 44, the device register 45A determines that the authentication of the device registration request program 67B has failed.

When determining in S102 that the authentication of the device registration request program 67B has failed, the device register 45A sends to the device registration requester 68B a notification that the authentication of the device registration request program 67B has failed (S103).

When the processing in S103 ends, the device register 45A shuts off the communication with the device registration requester 68B of the image forming apparatus 60 (S104).

When receiving the notification sent in S103, the device registration requester 68B allows the display device 62 to display the failure in the authentication of the device registration request program 67B (S105).

When determining in S102 that the authentication of the device registration request program 67B is successful, the device register 45A sends to the device registration requester 68B a notification that the authentication of the device registration request program 67B has been successful (S106).

Next, a description will be given of an operation of the management system 10 when the device registration requester 68B has accepted an input of an e-mail address.

When receiving the notification sent in S106, the device registration requester 68B of the image forming apparatus 60 can accept an input of an e-mail address as information necessary for the cloud service 31 in order to register the image forming apparatus 60. Therefore, the user of the image forming apparatus 60 can input an e-mail address through the operation device 61 to the device registration requester 68B.

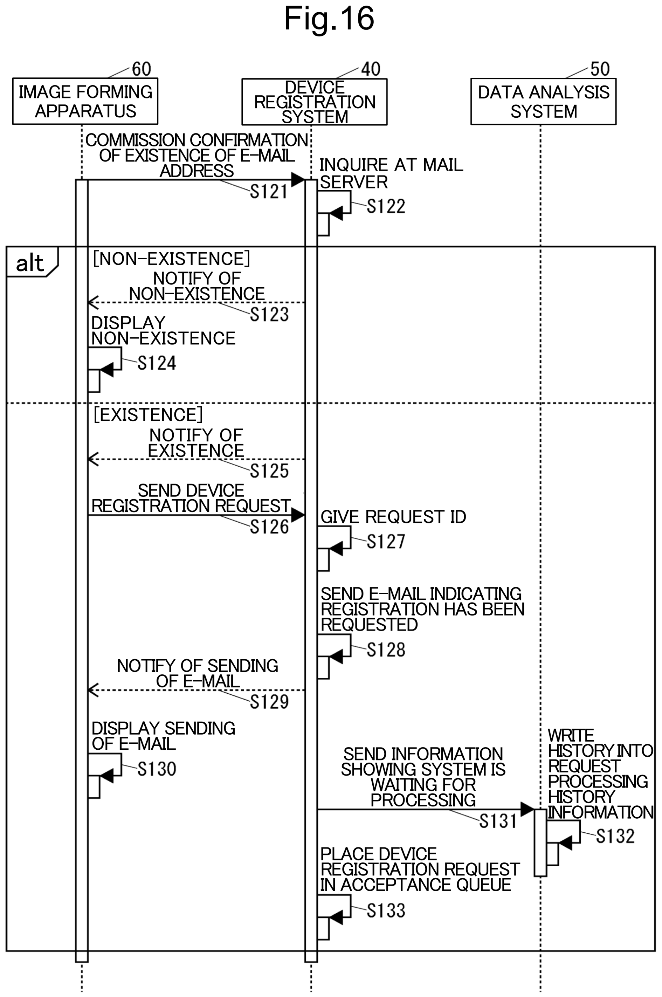

FIG. 16 is a sequence diagram of the operation of the management system 10 when the device registration requester 68B has accepted an input of an e-mail address.

When an e-mail address is input through the operation device 61 after the receipt of the notification sent in S106, the device registration requester 68B of the image forming apparatus 60 gives, as shown in FIG. 16, the device registration system 40 a commission to confirm whether or not the input e-mail address is existent (S121).

When receiving the commission given in S121, the device register 45A of the device registration system 40 makes an inquiry to a mail server managing this e-mail address about the existence of the e-mail address subject to the commission in S121 (S122).

When the result of the inquiry in S122 shows non-existence of the e-mail address subject to the commission in S121, the device register 45A sends to the device registration requester 68B of the image forming apparatus 60 a notification of the non-existence of the e-mail address subject to the commission in S121 (S123).

When receiving the notification sent in S123, the device registration requester 68B of the image forming apparatus 60 allows the display device 62 to display the non-existence of the e-mail address subject to the commission in S121 (S124).

When the result of the inquiry in S 122 shows existence of the e-mail address subject to the commission in S 121, the device register 45A sends to the device registration requester 68B of the image forming apparatus 60 a notification of the existence of the e-mail address subject to the commission in S121 (S125).

When receiving the notification sent in S125, the device registration requester 68B of the image forming apparatus 60 sends to the device registration system 40 a device registration request for requesting the cloud service 31 to register the image forming apparatus 60 (S126). The device registration requester 68B allows the device registration request in S126 to contain: the device ID and product name of the image forming apparatus 60 both shown in the device information 67D; and the e-mail address subject to the commission in S121.

When receiving the device registration request sent in S126, the device register 45A of the device registration system 40 gives a request ID to the device registration request received in S126 (S127).

When the processing in S127 ends, the device register 45A sends, at the e-mail address subject to the commission in S121, an e-mail indicating that a request to register the image forming apparatus 60 has been issued to the cloud service 31 (S128).

When the processing in S128 ends, the device register 45A sends to the device registration requester 68B of the image processor 60 a notification that an e-mail has been sent at the e-mail address subject to the commission in S121 (S129).

When receiving the notification sent in S129, the device registration requester 68B of the image forming apparatus 60 allows the display device 62 to display that an e-mail has been sent at the e-mail address input by the user (S130).

When the processing in S 127 ends, the device register 45A of the device registration system 40 sends, to the data analysis system 50, information showing: the date and time when the device registration request has been received in S126; the request ID given in S127; and that the device register 45A is waiting for the processing of the device registration request (S131).

When receiving the information sent by the device registration system 40 in S131, the data analyzer 55A of the data analysis system 50 writes a history based on the received information into the request processing history information 54D (S132).

When the processing in S 127 ends, the device register 45A of the device registration system 40 places the device registration request received in S126 into the acceptance queue 44C (S133).

Next, a description will be given of an operation of the device registration system 40 when a device registration request has been placed into the acceptance queue 44C.

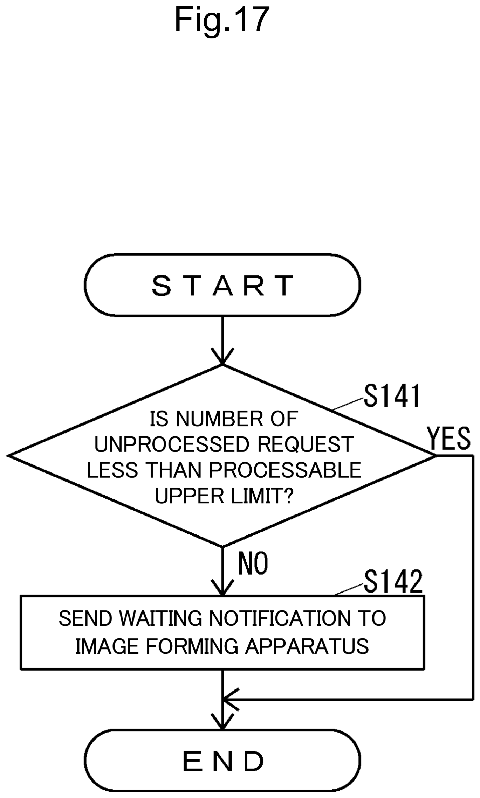

FIG. 17 is a flowchart of the operation of the device registration system 40 when a device registration request has been placed into the acceptance queue 44C.

Each time a device registration request (hereinafter, referred to as a "subject request" in the description of the operation shown in FIG. 17) has been placed into the acceptance queue 44C, the device register 45A of the device registration system 40 executes the operation shown in FIG. 17.

As shown in FIG. 17, the device register 45A determines whether or not the number of unprocessed requests shown in the unprocessed request number information 44D is less than the processable upper limit shown in the processable upper limit information 44E (S141).

When determining in S141 that the number of unprocessed requests shown in the unprocessed request number information 44D is not less than the processable upper limit shown in the processable upper limit information 44E, the device register 45A sends to the image forming apparatus as a source of the subject request a notification indicating that the device register 45A has the subject request waiting to be sent to the cloud service 31, i.e., has the cloud application providing system 20 waiting to start the processing of the subject request (hereinafter, referred to as a "waiting notification") (S142). The device register 45A allows the waiting notification to be sent in S142 to contain the request ID of the subject request.

When the device register 45A determines in S141 that the number of unprocessed requests shown in the unprocessed request number information 44D is less than the processable upper limit shown in the processable upper limit information 44E or the processing in S142 ends, the device register 45A terminates the operation shown in FIG. 17.

Next, a description will be given of an operation of the image forming apparatus 60 when having received a waiting notification.

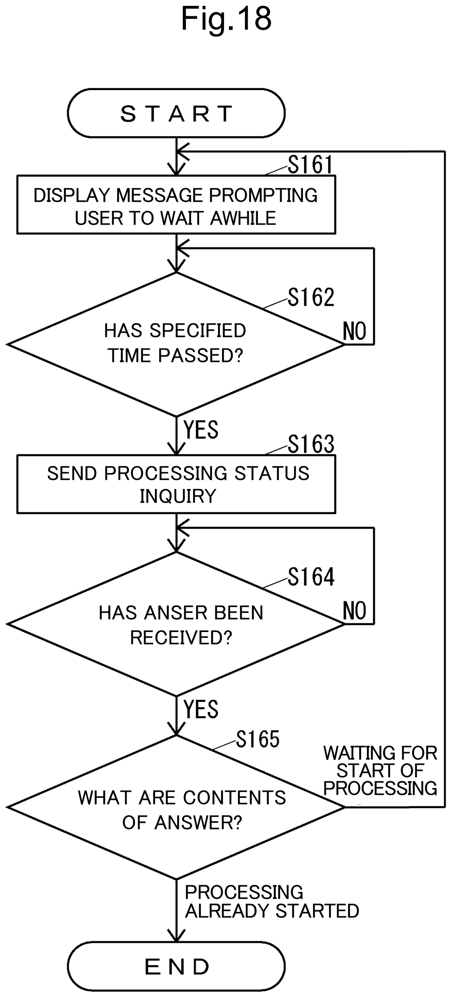

FIG. 18 is a flowchart of the operation of the image forming apparatus 60 when having received a waiting notification.

When receiving a waiting notification (hereinafter, referred to as a "subject notification" in the description of the operation shown in FIG. 18) from the device registration system 40, the device registration requester 68B of the image forming apparatus 60 executes the operation shown in FIG. 18.

As shown in FIG. 18, the device registration requester 68B allows the display device 62 to display a message prompting the user to wait a little more, such as, for example, "Your request is being processed. Please wait a little more." (S161).

When the processing in S161 ends, the device registration requester 68B determines whether or not a specified time has passed since the end of the immediately preceding processing step S161, until it determines that the specified time has passed since the end of the immediately preceding processing step S161 (S162). In this case, the specified time is, for example, five minutes.

When determining in S162 that the specified periodic time has passed, the device registration requester 68B sends to the device registration system 40 an inquiry about the processing status of a device registration request (hereinafter, referred to as a "processing status inquiry") that can be identified by the request ID contained in the subject notification (S163). The device registration requester 68B allows the processing status inquiry to be sent in S163 to contain the request ID contained in the subject notification.

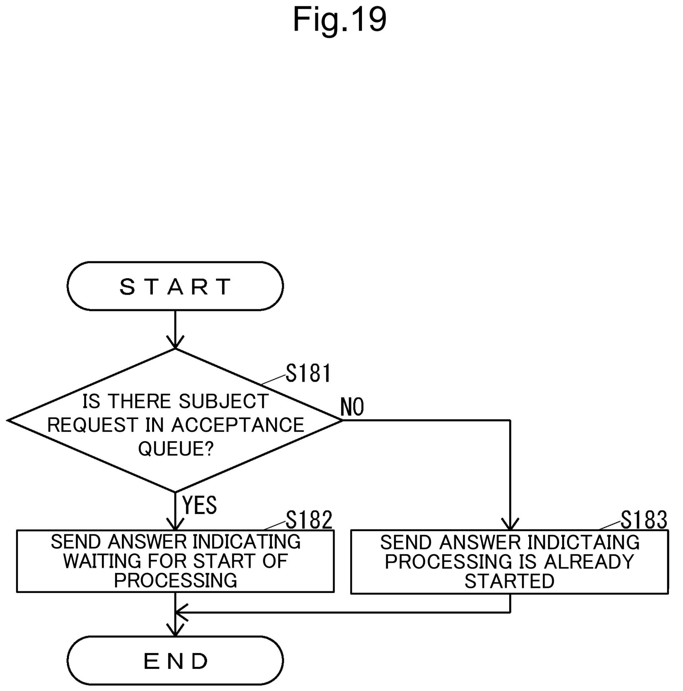

FIG. 19 is a flowchart of an operation of the device registration system 40 when having received a processing status inquiry.

When receiving a processing status inquiry (hereinafter, referred to as a "subject inquiry" in the description of the operation shown in FIG. 19) from the image forming apparatus 60, the device register 45A of the device registration system 40 executes the operation shown in FIG. 19.

As shown in FIG. 19, the device register 45A determines whether or not a device registration request (hereinafter, referred to as a "subject request" in the description of the operation shown in FIG. 19) that can be identified by the request ID contained in the subject inquiry exists in the acceptance queue 44C (S181).

When determining in S181 that the subject request exists in the acceptance queue 44C, the device register 45A sends to the image forming apparatus as a source of the subject inquiry an answer indicating that the device register 45A has the subject request waiting to be sent to the cloud service 31, i.e., has the cloud application providing system 20 waiting to start the processing of the subject request (S182) and then terminates the operation shown in FIG. 19.

When determining in S181 that the subject request does not exist in the acceptance queue 44C, the device register 45A sends to the image forming apparatus as a source of the subject inquiry an answer indicating that the device register 45A has already sent the subject request to the cloud service 31, i.e., has already allowed the cloud application providing system 20 to start the processing of the subject request (S183) and then terminates the operation shown in FIG. 19.

As shown in FIG. 18, when the processing in S163 ends, the device registration requester 68B determines whether or not it has received from the device registration system 40 an answer to the processing status inquiry sent to the device registration system 40 in S163, until it determines that it has received from the device registration system 40 an answer to the processing status inquiry sent to the device registration system 40 in S163 (S164).

When determining in S164 to have received from the device registration system 40 an answer to the processing status inquiry sent to the device registration system 40 in S163, the device registration requester 68B determines the contents of the answer that it has received from the device registration system 40 (S165).

When the contents of the answer from the device registration system 40 indicate that the device register 45A has the cloud application providing system 20 waiting to start the processing of the subject request, the device registration requester 68B executes the processing in S161.

When the contents of the answer from the device registration system 40 indicate that the device register 45A has already allowed the cloud application providing system 20 to start the processing of the subject request, the device registration requester 68B terminates the operation shown in FIG. 18.

Next, a description will be given of an operation of the device registration system 40 in sending a device registration request placed in the acceptance queue 44C to the cloud service 31.

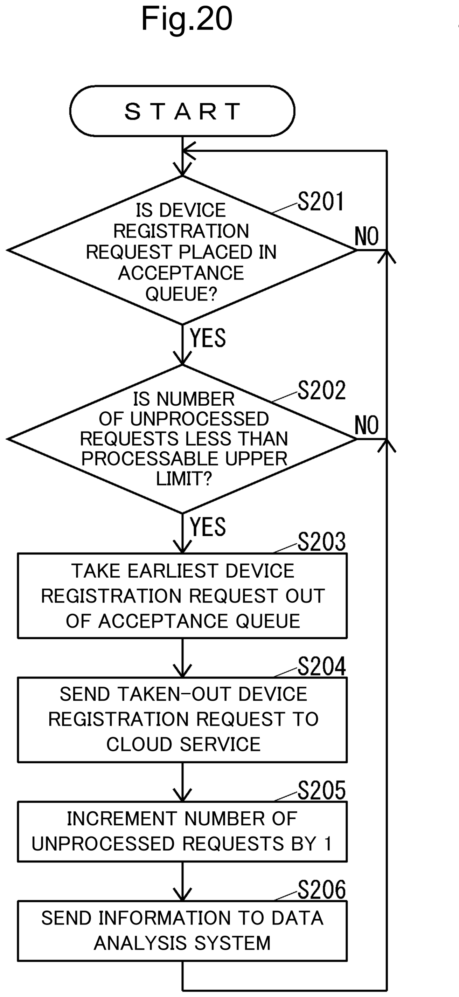

FIG. 20 is a flowchart of an example of the operation of the device registration system 40 in sending a device registration request placed in the acceptance queue 44C to the cloud service 31.

As shown in FIG. 20, the device register 45A of the device registration system 40 determines whether or not any device registration request is placed in the acceptance queue 44C, until it determines that any device registration request is placed in the acceptance queue 44C (S201).

When determining in S201 that any device registration request is placed in the acceptance queue 44C, the device register 45A determines whether or not the number of unprocessed requests shown in the unprocessed request number information 44D is less than the processable upper limit shown in the processable upper limit information 44E (S202).

When determining in S202 that the number of unprocessed requests shown in the unprocessed request number information 44D is less than the processable upper limit shown in the processable upper limit information 44E, the device register 45A takes, among the device registration requests placed in the acceptance queue 44C, the earliest device registration request out of the acceptance queue 44C (S203).

When the processing in S203 ends, the device register 45A sends the device registration request taken out of the acceptance queue 44C in S203, after associating it with the tenant ID of the seller tenant associated with the device registration system 40, to the cloud service 31 (S204).

When the processing in S204 ends, the device register 45A increments the number of unprocessed requests shown in the unprocessed request number information 44D by 1 (S205).

When the processing in S205 ends, the device register 45A sends, to the data analysis system 50, information showing: the date and time when it has sent the device registration request in S204; the request ID of the device registration request sent in S204; and that the processing of the device registration request is under execution (S206). When receiving the information sent by the device registration system 40 in S206, the data analyzer 55A of the data analysis system 50 writes a history based on the received information into the request processing history information 54D.

When the device register 45A determines in S202 that the number of unprocessed requests shown in the unprocessed request number information 44D is not less than the processable upper limit shown in the processable upper limit information 44E or the processing in S206 ends, the device register 45A executes the processing in S201.

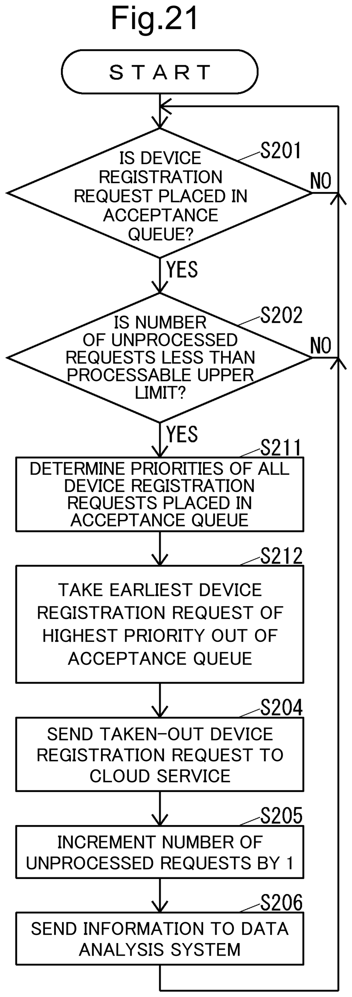

In the case described thus far, the device register 45A takes, among device registration requests placed in the acceptance queue 44C, the earliest device registration request out of the acceptance queue 44C in order to send it to the cloud service 31 (S203). However, as shown in FIG. 21, the device register 45A may specify, among device registration requests placed in the acceptance queue 44C, any device registration request to be taken out for sending to the cloud service 31 according to the plan.

FIG. 21 is a flowchart of another example of the operation of the device registration system 40 in sending a device registration request placed in the acceptance queue 44C to the cloud service 31, the example being different from the example shown in FIG. 20.

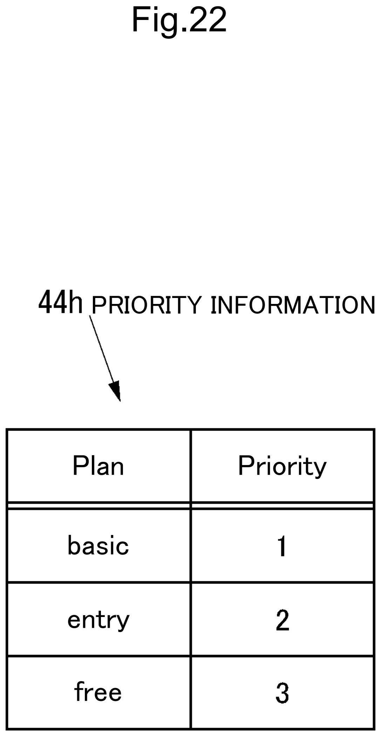

In the case where the device register 45A executes, instead of the operation shown in FIG. 20, the operation shown in FIG. 21, the device registration system 40 holds, in the storage device 44, priority information 44H (see FIG. 22) showing priorities in taking a device registration request out of the acceptance queue 44C.

FIG. 22 is a table showing an example of the priority information 44H.

The priority information 44H shown in FIG. 22 shows the correspondence relationship between plan and priority. In FIG. 22, a smaller number indicates a higher priority.

The operation shown in FIG. 21 is an operation that in the operation shown in FIG. 20 the processing step S203 (see FIG. 20) is replaced with the following processing steps S211 to S212.

As shown in FIG. 21, when determining in S202 that the number of unprocessed requests shown in the unprocessed request number information 44D is less than the processable upper limit shown in the processable upper limit information 44E, the device register 45A determines the priorities of all the device registration requests placed in the acceptance queue 44C based on the plan information 44F and the priority information 44H (S211). Specifically, for each device registration request placed in the acceptance queue 44C, the device register 45A determines the priority associated in the priority information 44H with the plan associated in the plan information 44F with the e-mail address contained in the device registration request.

When the processing in S211 ends, the device register 45A takes, among highest-priority device registration requests determined in S211, the earliest device registration request out of the acceptance queue 44C (S212).

When the processing in S212 ends, the device register 45A sends the device registration request taken out of the acceptance queue 44C in S212, after associating it with the tenant ID of the seller tenant associated with the device registration system 40, to the cloud service 31 (S204).

Next, a description will be given of an operation of the management system 10 in sending a device registration request from the device registration system 40 to the cloud service 31.

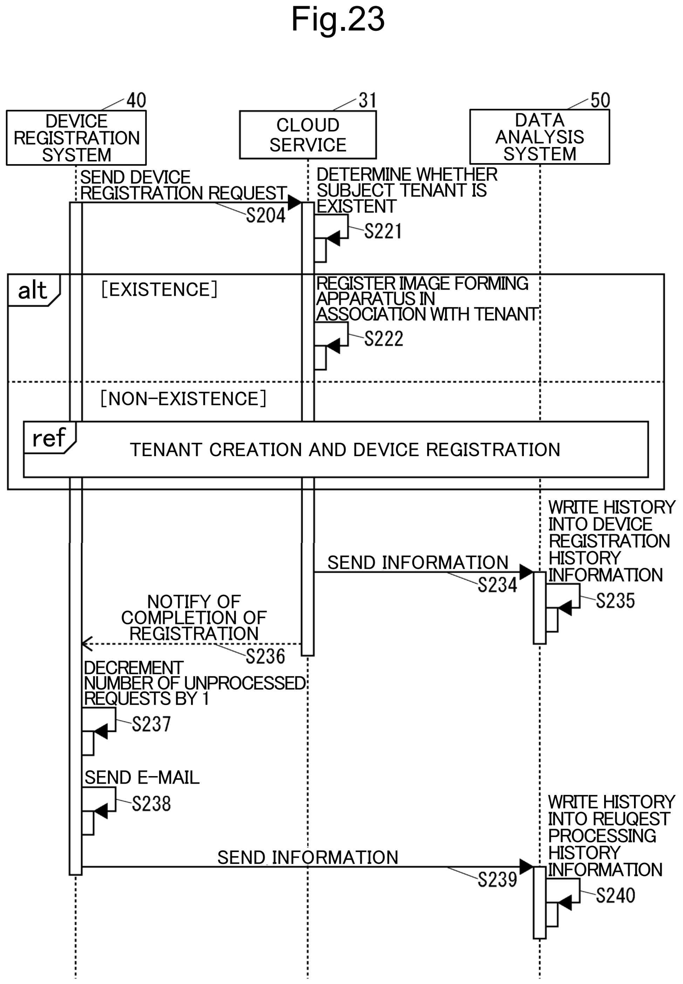

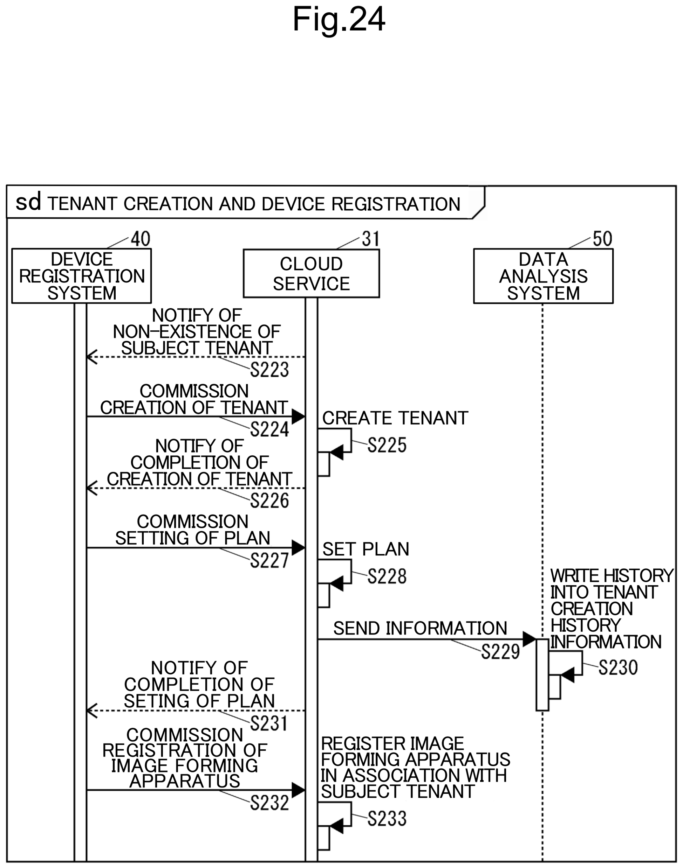

FIG. 23 is a sequence diagram of the operation of the management system 10 in sending a device registration request from the device registration system 40 to the cloud service 31. FIG. 24 is a sequence diagram of "TENANT CREATION AND DEVICE REGISTRATION" shown in FIG. 23.

As shown in FIGS. 23 and 24, when the device register 45A of the device registration system 40 sends a device registration request (hereinafter, referred to as a "subject request" in the description of the operation shown in FIGS. 23 and 24) to the cloud service 31 (S204 (see FIG. 20 or 21)), the cloud service 31 determines whether or not the tenant (hereinafter, referred to as a "subject tenant" in the description of the operation shown in FIGS. 23 and 24) associated with the e-mail address contained in the subject request received from the device registration system 40 exists directly subordinated to the seller tenant identified by the tenant ID associated with the subject request and received from the device registration system 40 (S221).

When determining in S221 that the subject tenant exists directly subordinated to the seller tenant identified by the tenant ID associated with the subject request and received from the device registration system 40, the cloud service 31 registers the image forming apparatus identified by the device ID contained in the subject request received from the device registration system 40, in association with the subject tenant existing directly subordinated to the seller tenant identified by the tenant ID associated with the subject request and received from the device registration system 40 (S222). Specifically, the cloud service 31 creates in the device management information 24A a record containing a combination of: the tenant ID associated with the subject request and received from the device registration system 40, wherein the tenant ID is the tenant ID of the direct superior tenant existing in a record in the device management information 24C and its representative's address is the e-mail address contained in the subject request received from the device registration system 40; the device ID contained in the subject request received from the device registration system 40; and the product name contained in the subject request received from the device registration system 40.

When determining in S221 that the subject tenant does not exist directly subordinated to the seller tenant identified by the tenant ID associated with the subject request and received from the device registration system 40, the cloud service 31 sends to the device registration system 40 a notification that the subject tenant does not exist (S223).

When receiving the notification sent in S223, the device register 45A of the device registration system 40 gives the cloud service 31 a commission to create a tenant associated with the e-mail address contained in the subject request (S224). The device register 45A allows the commission in S224 to contain the tenant ID of the seller tenant associated with the device registration system 40.

When receiving the commission given in S224, the cloud service 31 creates, as a direct subordinate to the seller tenant identified by the tenant ID contained in the commission given in S224, a tenant associated with the e-mail address contained in the subject request (S225). Specifically, the cloud service 31 creates in the tenant management information 24C a record that contains as a tenant ID of the direct superior tenant the tenant ID contained in the commission given in S224 and contains as a representative's address the e-mail address contained in the subject request. The cloud service 31 creates, as a tenant ID in this record to be created in S225, a tenant ID different from the existing tenant IDs.

When the processing in S225 ends, the cloud service 31 sends to the device registration system 40 a notification of the completion of creation of the tenant (S226).

When receiving the notification sent in S226, the device register 45A of the device registration system 40 gives the cloud service 31 a commission to set, as to the tenant subject to the notification sent in S226, a plan associated in the plan information 44F with the e-mail address contained in the subject request (S227).

When receiving the commission given in S227, the cloud service 31 sets the plan contained in the commission given in S227 as a plan associated, in the record created in the tenant management information 24C, with the tenant ID of the tenant subject to the commission given in S227 (S228).

When the processing in S228 ends, the cloud service 31 sends to the data analysis system 50 information containing: the date and time of creation of the tenant in the processing in S225; the tenant ID of the tenant created in the processing in S225; and the plan set in the processing in S228 (S229).

When receiving the information sent by the cloud service 31 in S229, the data analyzer 55A of the data analysis system 50 writes a history based on the received information into the tenant creation history information 54B (S230).

When the processing in S228 ends, the cloud service 31 sends to the device registration system 40 a notification of the completion of setting of the plan (S231).

When receiving the notification sent in S231, the device register 45A of the device registration system 40 gives the cloud service 31 a commission to register, in association with the tenant subject to the notification sent in S226, the image forming apparatus identified by the device ID contained in the subject request (S232).

When receiving the commission sent in S232, the cloud service 31 registers, in association with the tenant subject to the commission sent in S232, the image forming apparatus subject to the commission sent in S232 (S233). Specifically, the cloud service 31 creates in the device management information 24E a record containing a combination of: the tenant ID of the tenant subject to the commission sent in S232; the device ID of the image forming apparatus subject to the commission sent in S232; and the product name contained in the subject request.

When the processing in S222 or the processing in S233 ends, the cloud service 31 sends to the data analysis system 50 information containing: the date and time of registration of the image forming apparatus in the processing in S222 or S233; the device ID of the image forming apparatus registered in the processing in S222 or S233; the tenant ID of the tenant in association with which the image forming apparatus has been registered in the processing in S222 or S233; and the product name of the image forming apparatus registered in the processing in S222 or S233 (S234).

When receiving the information sent by the cloud service 31 in S234, the data analyzer 55A of the data analysis system 50 writes a history based on the received information into the device registration history information 54C (S235).

When the processing in S222 or the processing in S233 ends, the cloud service 31 sends to the device registration system 40 a notification of the completion of registration of the image forming apparatus (S236).

When receiving the notification sent in S236, the device register 45A of the device registration system 40 decrements the number of unprocessed requests shown in the unprocessed request number information 44D by 1 (S237).

The above description has been given of the example where when the registration of an image forming apparatus is successful, the device register 45A decrements the number of unprocessed requests by 1. However, also when the registration of an image forming apparatus has failed, the device register 45A likewise decrements the number of unprocessed requests by 1.

When the processing in S237 ends, the device register 45A sends an e-mail notifying of the success of registration of the image forming apparatus at the e-mail address contained in the subject request and the e-mail address shown in the seller address information 44G, i.e., the e-mail address of the tenant manager of the seller tenant associated with the device registration system 40 (S238). The device register 45A may acquire from the cloud service 31 the e-mail address of the tenant manager of the seller tenant associated with the device registration system 40.

The above description has been given of the example where when the registration of an image forming apparatus is successful, the device register 45A sends an e-mail notifying of the success of registration of the image forming apparatus at the e-mail address contained in the subject request and the e-mail address of the tenant manager of the seller tenant associated with the device registration system 40. However, also when the registration of an image forming apparatus has failed, the device register 45A likewise sends an e-mail notifying of the failure of registration of the image forming apparatus at the e-mail address contained in the subject request and the e-mail address of the tenant manager of the seller tenant associated with the device registration system 40. Furthermore, also when the creation of a tenant has failed, the device register 45A likewise sends an e-mail notifying of the failure of creation of a tenant at the e-mail address contained in the subject request and the e-mail address of the tenant manager of the seller tenant associated with the device registration system 40.

When the processing in S237 ends, the device register 45A of the device registration system 40 sends, to the data analysis system 50, information showing: the date and time when it has received the notification sent in S236; the request ID of the subject request; and the success of the processing of the device registration request (S239).

When receiving the information sent by the device registration system 40 in S239, the data analyzer 55A of the data analysis system 50 writes a history based on the received information into the request processing history information 54D (S240).

The above description has been given of the example where when the registration of an image forming apparatus is successful, a history of the successful processing of the device registration request is written into the request processing history information 54D. However, also when the registration of an image forming apparatus has failed, a history of the failed processing of the device registration request is likewise written into the request processing history information 54D.

Next, a description will be given of an operation of the data analysis system 50 in displaying a dashboard for management.

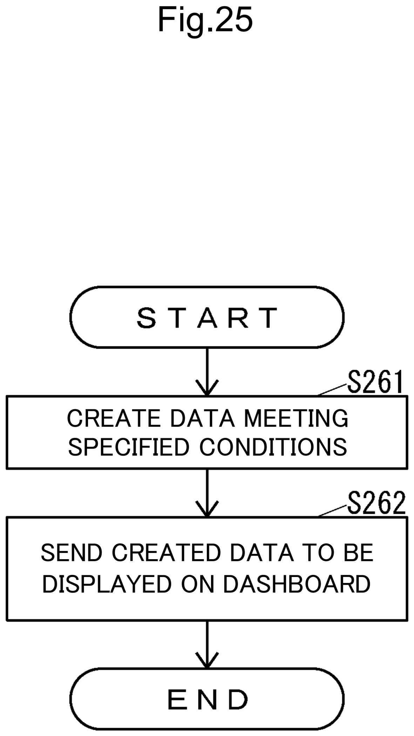

FIG. 25 is a flowchart of the operation of the data analysis system 50 in displaying a dashboard for management.

The tenant manager of the seller tenant associated with the device registration system 40 can instruct the data analysis system 50 to display a dashboard for management, for example, via an unshown computer, such as a PC. In this relation, the tenant manager of the seller tenant associated with the device registration system 40 can specify the conditions on information to be displayed on the dashboard for management. Examples of the conditions include various conditions on the registration of image forming apparatuses into the cloud application providing system 20, such as the number of tenants created over the past week, the number of image forming apparatuses successfully registered in the past three days, and the number of image forming apparatuses failed in registration in the past three days.

When an instruction to display a dashboard for management is issued, as shown in FIG. 25, the data analyzer 55A of the data analysis system 50 creates data meeting the specified conditions (S261).

When the processing in S261 ends, the data analyzer 55A sends the data created in S261 and to be displayed on a dashboard to the computer having instructed the data analysis system 50 to display the dashboard (S262) and then terminates the operation shown in FIG. 25.

When receiving the data sent by the data analysis system 50 in S262, the computer having instructed the data analysis system 50 to display a dashboard displays a dashboard corresponding the received data. Therefore, the tenant manager of the seller tenant associated with the device registration system 40 can confirm on the dashboard information that the tenant manager desires.

As described thus far, upon receipt of a request to register an image forming apparatus into the cloud application providing system 20, i.e., a device registration request, from the image forming apparatus, the device registration system 40 allows the cloud application providing system 20 to create a tenant in association with which the image forming apparatus as a source of the device registration request is to be registered (S224 to S225) and allows the cloud application providing system 20 to register the image forming apparatus as a source of the device registration request in association with the tenant created by the cloud application providing system 20 (S232 to S233), which facilitates the creation of a tenant. Therefore, the device registration system 40 can shorten the time taken to register an image forming apparatus into the cloud application providing system 20.

When a tenant already associated with an e-mail address contained in a device registration request and already managed by the cloud application providing system 20 exists, the device registration system 40 keeps the cloud application providing system 20 from creating a tenant in association which an image forming apparatus as a source of the device registration request is to be registered (S221 to S222), which reduces the possibility of creation of an unnecessary tenant.

Upon receipt of a device registration request sent from an image forming apparatus, the device registration system 40 sends an e-mail of the receipt of a device registration request at an e-mail address contained in the device registration request (S128), which increases the convenience.

When allowing the cloud application providing system 20 to create a tenant in association which an image forming apparatus as a source of a device registration request is to be registered (S224 to S225), the device registration system 40 allows the cloud application providing system 20 to set, as to the tenant created by the cloud application providing system 20, a plan (license) meeting an e-mail address contained in the device registration request (S227 to S228), which increases the convenience.

When the number of device registration requests still unprocessed by the cloud application providing system 20 among device registration requests the processing of which the device registration system 40 has allowed the cloud application providing system 20 to start, i.e., the number of unprocessed requests, is less than the processable upper limit (YES in S202), the device registration system 40 allows the cloud application providing system 20 to start processing based on a new device registration request (S204). On the other hand, when the number of unprocessed requests is not less than the processable upper limit (NO in S202), the device registration system 40 allows the cloud application providing system 20 to wait to start processing based on a new device registration request. Therefore, the possibility that the cloud application providing system 20 is overloaded can be reduced.

In allowing the cloud application providing system 20 to wait to start processing based on a new device registration request (NO in S141), the device registration system 40 sends, to an image forming apparatus as a source of the new device registration request the processing of which the cloud application providing system 20 waits to start, a notification that the device registration system 40 has the cloud application providing system 20 waiting to start the processing (S142), which increases the convenience.

In the case where there are a plurality of device registration requests the processing of which the device registration system 40 has the cloud application providing system 20 waiting to start, the device registration system 40 selects as a device registration request to be started to be processed next by the cloud application providing system 20, among the above plurality of device registration requests, one of the device registration requests having the highest priority based on the plan (license) according to e-mail addresses contained in the device registration requests, the one as to which the device registration system 40 has allowed the cloud application providing system 20 to wait to start processing earliest (S211 to S212), which enables an image forming apparatus to be registered at a priority based on a plan (license) into the cloud application providing system 20.

In the management system 10, the data analysis system 50 displays, in the form of a dashboard, information about the registration of image forming apparatuses into the cloud application providing system 20 (S262), which increases the convenience.

The "specific type of information" in the present invention refers to the "e-mail address" in the above embodiment. However, the "specific type of information" in the present invention may be information other than the "e-mail address".

The "electronic device" in the present invention refers to the "image forming apparatus" in the above embodiment. However, the "electronic device" in the present invention may be an electronic device other than the "image forming apparatus".

The description thus far has been given of a device registration system for use in registering an electronic device into a cloud application providing system that provides a cloud application for use by the electronic device. However, the device registration system according to the present invention may be one for use in registering an electronic device into an application providing system that provides, other than a cloud application, an application for use by the electronic device.

A general system not according to the above embodiment cannot create a tenant from an electronic device being used by a user and, therefore, has a problem with the complexity in the task of creating a tenant. In the above embodiment, a tenant can be easily created as compared to the general system.

## Claims

1. A device registration system (40) for use in registering an electronic device (60) into an application providing system (20) that provides an application for use by the electronic device (60),
wherein when receiving from the electronic device (60) a request to register the electronic device (60) into the application providing system (20), the device registration system (40) allows the application providing system (20) to create a tenant in association with which the electronic device (60) as a source of the request is to be registered and allows the application providing system (20) to register the electronic device (60) as the source of the request in association with the tenant created by the application providing system (20).

2. The device registration system (40) according to claim 1, wherein when authentication information received from the electronic device (60) coincides with specified authentication information previously stored in the device registration system (40), the device registration system (40) proceeds with, based on the request received from the electronic device (60), processing for allowing the application providing system (20) to create the tenant and register the electronic device (60) in association with the tenant.

3. The device registration system (40) according to claim 1, wherein
the application providing system (20) manages the tenant in association with a specific type of information,
the request contains the specific type of information, and
when there is the tenant managed, in association with the specific type of information contained in the request, by the application providing system (20), the device registration system (40) keeps the application providing system (20) from creating the tenant in association with the electronic device (60) as the source of the request is to be registered.

4. The device registration system (40) according to claim 3, wherein
the specific type of information is an e-mail address, and
upon receipt of the request sent from the electronic device (60), the device registration system (40) sends an e-mail of the receipt of the request at the e-mail address contained in the request.

5. The device registration system (40) according to claim 3, wherein
one of a plurality of licenses having different restrictions on use of the application is set for the tenant, and
when allowing the application providing system (20) to create the tenant in association with which the electronic device (60) as the source of the request is to be registered, the device registration system (40) allows the application providing system (20) to set, as to the tenant created by the application providing system (20), the license meeting the specific type of information contained in the request.

6. The device registration system (40) according to claim 1, wherein
when the number of, among the requests processing of which the device registration system (40) has allowed the application providing system (20) to start, the requests still unprocessed by the application providing system (20) is less than a specific number, the device registration system (40) allows the application providing system (20) to start processing based on the request newly given, and
when the number of, among the requests the processing of which the device registration system (40) has allowed the application providing system (20) to start, the requests still unprocessed by the application providing system (20) is not less than the specific number, the device registration system (40) allows the application providing system (20) to wait to start processing based on the request newly given.

7. The device registration system (40) according to claim 6, wherein in allowing the application providing system (20) to wait to start processing based on the newly given request, the device registration system (40) sends, to the electronic device (60) as the source of the request the processing of which the device registration system (40) allows the application providing system (20) to wait to start, a notification that the device registration system (40) has the application providing system (20) waiting to start the processing.

8. The device registration system (40) according to claim 6, wherein
the request contains a specific type of information,
one of a plurality of licenses having different restrictions on use of the application is set for the tenant,
when allowing the application providing system (20) to create the tenant in association with which the electronic device (60) as the source of the request is to be registered, the device registration system (40) allows the application providing system (20) to set, as to the tenant created by the application providing system (20), the license meeting the specific type of information contained in the request, and
when there are a plurality of the requests the processing of which the device registration system (40) has the application providing system (20) waiting to start, the device registration system (40) selects as the request to be started to be processed next by the application providing system (20), among the plurality of the requests the processing of which the device registration system (40) has the application providing system (20) waiting to start, one of the requests having highest priority based on the license according to the specific types of information contained in the requests, the one as to which the device registration system (40) has allowed the application providing system (20) to wait to start the processing earliest.

9. A device registration device allowing an electronic device (60) to be registered into an application providing system (20) that provides an application for use by the electronic device (60), wherein when receiving from the electronic device (60) a request to register the electronic device (60) into the application providing system (20), the device registration device allows the application providing system (20) to create a tenant in association with which the electronic device (60) as a source of the request is to be registered and allows the application providing system (20) to register the electronic device (60) as the source of the request in association with the tenant created by the application providing system (20).

10. A device registration program (44A) for use in registering an electronic device (60) into an application providing system (20) that provides an application for use by the electronic device (60), wherein when a computer receives from the electronic device (60) a request to register the electronic device (60) into the application providing system (20), the device registration program (44A) allows the computer to execute to allow the application providing system (20) to create a tenant in association with which the electronic device (60) as a source of the request is to be registered and allows the computer to execute to allow the application providing system (20) to register the electronic device (60) as the source of the request in association with the tenant created by the application providing system (20).

11. A management system (10) comprising:
an electronic device (60);
an application providing system (20) that provides an application for use by the electronic device (60); and
the device registration system (40) according to claim 1.

12. The management system (10) according to claim 11,
further comprising a data analysis system (50) that analyzes data acquired from at least one of the application providing system (20) and the device registration system (40),
the data analysis system (50) displaying, on a dashboard, information on registration of the electronic device (60) into the application providing system (20).
